# EUROPEAN PATENT APPLICATION

(11) **EP 4 628 746 A1**
(43) Date of publication of application: **08.10.2025**
(21) Application number: 23897841.5
(22) Date of filing: 29.11.2023
(51) Int. Cl.: F16F 1/18

(54) **COMPRESSION SPRING DEVICE**

(30) Priority: 29.11.2022 JP 2022190366
(71) Applicant: NHK Spring Co., Ltd., Yokohama-shi, Kanagawa 236-0004 (JP)
(72) Inventor: IINO Shinji, Yokohama-shi, Kanagawa 236-0004 (JP); SANO Takamichi, Yokohama-shi, Kanagawa 236-0004 (JP); UETSUHARA Saiji, Yokohama-shi, Kanagawa 236-0004 (JP); SUZUKI Takuto, Yokohama-shi, Kanagawa 236-0004 (JP)
(74) Representative: V.O.
(86) International application number: PCT/JP2023/042785
(87) International publication number: WO 2024/117195

(57) **Abstract**

A pressing spring device (1, 2) includes: a first leaf spring (11) and a second leaf spring (12) extending in a length direction (X), both end portions of the first leaf spring in the length direction are fixation portions (21) laminated and connected to the second leaf spring in a plate-thickness direction (Z), intermediate portions (23, 24) of the first leaf spring and the second leaf spring in the length direction face each other while spaced apart in the plate-thickness direction, the intermediate portion of the first leaf spring includes: a pair of first vertical wall portions (25) extending from the fixation portions of the first leaf spring in a direction of being away from the second leaf spring in the plate-thickness direction, and a first flat portion (26) joining the pair of first vertical wall portions in the length direction, and the length of the intermediate portion of the second leaf spring along the surface of the second leaf spring when viewed in a plate-width direction (Y) is less than the length of the intermediate portion of the first leaf spring along the surface of the first leaf spring when viewed in the plate-width direction.

## Description

### TECHNICAL FIELD

The present invention relates to a pressing spring device.

Priority is claimed on Japanese Patent Application No. 2022-190366, filed November 29, 2022, the content of which is incorporated herein by reference.

### BACKGROUND ART

In the related art, as shown in, for example, Patent Document 1 below, a pressing spring device is known in which a pressed object is located between and pressed by apexes of curved first and second leaf springs in a plate-thickness direction.

### Citation List

### Patent Document

Patent Document 1: Japanese Patent No. 5040228

### SUMMARY OF INVENTION

### Technical Problem

It was difficult for pressing spring devices in the related art to output a high pressing force with a short stroke.

An object of the present invention is to provide a pressing spring device that can output a high pressing force with a short stroke.

### Solution to Problem

A pressing spring device according to an aspect of the present invention includes: a first leaf spring and a second leaf spring extending in a length direction, wherein both end portions of the first leaf spring in the length direction are fixation portions laminated and connected to the second leaf spring in a plate-thickness direction, intermediate portions of the first leaf spring and the second leaf spring in the length direction face each other while spaced apart in the plate-thickness direction, the intermediate portion of the first leaf spring includes a pair of first vertical wall portions extending from the fixation portions of the first leaf spring in a direction of being away from the second leaf spring in the plate-thickness direction, and a first flat portion joining the pair of first vertical wall portions in the length direction, and a length of the intermediate portion of the second leaf spring along a surface of the second leaf spring when viewed in a plate-width direction is less than a length of the intermediate portion of the first leaf spring along a surface of the first leaf spring when viewed in the plate-width direction.

Since the first leaf spring and the second leaf spring are included, when the pressing spring device is located between a pair of pressed objects in the plate-thickness direction and a pushing load that is directed toward the second leaf spring in the plate-thickness direction is applied to the first flat portion of the first leaf spring, a tensile force in the length direction is applied to the second leaf spring through the first vertical wall portions and the fixation portions of the first leaf spring.

At this time, since the length of the intermediate portion of the second leaf spring along the surface of the second leaf spring when viewed in the plate-width direction is less than the length of the intermediate portion of the first leaf spring along the surface of the first leaf spring when viewed in the plate-width direction, regardless of a material or the like of the second leaf spring, the second leaf spring limits deformation of the first leaf spring, making it possible to increase the spring constant of the pressing spring device that appears, and it is possible to output a high pressing force with a short stroke.

In the aspect of the present invention, when a pushing load that is directed toward the second leaf spring in the plate-thickness direction is applied to the first flat portion, the first flat portion may be formed so as to be elastically deformable to bulge toward the second leaf spring in the plate-thickness direction.

When the pushing load applied to the first flat portion of the first leaf spring increases and the deformation of the second leaf spring in the length direction is restricted, the first flat portion is elastically deformed to bulge toward the second leaf spring in the plate-thickness direction, making it possible to reduce the spring constant of the pressing spring device that appears. Therefore, in the process in which the applied pushing load in the plate-thickness direction increases, the spring constant that appears can be made high during small displacements and low during large displacements.

In the aspect of the present invention, a length of the first flat portion along a surface of the first flat portion when viewed in the plate-width direction may be greater than lengths of the first vertical wall portions along surfaces of the first vertical wall portions when viewed in the plate-width direction.

Since the length of the first flat portion along the surface of the first flat portion when viewed in the plate-width direction is greater than the length of the first vertical wall portion along the surface of the first vertical wall portion when viewed in the plate-width direction, in the process in which the pushing load applied to the first flat portion increases, when the deformation of the second leaf spring in the length direction is restricted, the first flat portion can be easily deformed to bulge toward the second leaf spring in the plate-thickness direction.

The pressing spring device according to the aspect of the present invention may include a third leaf spring having an intermediate portion, the intermediate portion being, when viewed in the plate-width direction, provided on an opposite side of the intermediate portion of the second leaf spring to the first leaf spring such that the intermediate portion of the second leaf spring is located between the first leaf spring and the intermediate portion of the third leaf spring in the plate-thickness direction, wherein, when viewed in the plate-width direction, the intermediate portions of the second leaf spring and the third leaf spring may be spaced apart in the plate-thickness direction.

When viewed in the plate-width direction, the intermediate portion of the third leaf spring is provided on the opposite side of the intermediate portion of the second leaf spring to the first leaf spring such that the intermediate portion of the second leaf spring is located between the first leaf spring and the intermediate portion of the third leaf spring in the plate-thickness direction and, when viewed in the plate-width direction, the intermediate portions of the second leaf spring and the third leaf spring are spaced apart in the plate-thickness direction. Thus, the first flat portion of the first leaf spring and the intermediate portion of the third leaf spring are located between the pair of pressed objects in the plate-thickness direction, it is possible to apply a pushing load to the first leaf spring and the third leaf spring with a little variation in load from the pair of pressed objects, and stabilizing the posture of the pressing spring device between the pair of pressed objects, or the like, can be obtained.

The pressing spring device according to the aspect of the present invention may include a pair of third leaf springs provided on both sides of the first leaf spring in the plate-width direction, wherein both end portions of each third leaf spring in the length direction may be protruding portions protruding from the fixation portions of the first leaf spring in the plate-width direction, an intermediate portion of each third leaf spring in the length direction may include: a pair of third vertical wall portions, when viewed in the plate-width direction, extending from the protruding portions of each third leaf spring in a direction of being away from the intermediate portion of the first leaf spring in the plate-thickness direction, and a third flat portion joining the pair of third vertical wall portions in the length direction, and the third flat portion may be, when viewed in the plate-width direction, located on an opposite side of the intermediate portion of the second leaf spring to the first flat portion such that the intermediate portion of the second leaf spring is located between the first flat portion and the third flat portion in the plate-thickness direction.

Since the third leaf springs that each include the protruding portions, the pair of third vertical wall portions, and the third flat portion are provided, the first flat portion of the first leaf spring and the third flat portions of the third leaf springs are located between the pair of pressed objects in the plate-thickness direction, it is possible to apply a pushing load to the first leaf spring and the third leaf springs with a little variation in load from the pair of pressed objects, and stabilizing the posture of the pressing spring device between the pair of pressed objects, or the like, can be obtained.

### Advantageous Effects of Invention

According to the above aspect of the present invention, it is possible to output a high pressing force with a short stroke.

### BRIEF DESCRIPTION OF DRAWINGS

[FIG. 1] A perspective view of a pressing spring device of a first embodiment.
[FIG. 2] A diagram of the pressing spring device in FIG. 1 when viewed in a plate-width direction.
[FIG. 3] A diagram showing a state in which a pushing load in a plate-thickness direction is applied to the pressing spring device in FIG. 2.
[FIG. 4] A perspective view of a pressing spring device of a second embodiment.
[FIG. 5] A diagram of the pressing spring device in FIG. 4 when viewed in a plate-width direction.
[FIG. 6] A cross-sectional view taken along line VI-VI in FIG. 5.

### DESCRIPTION OF EMBODIMENTS

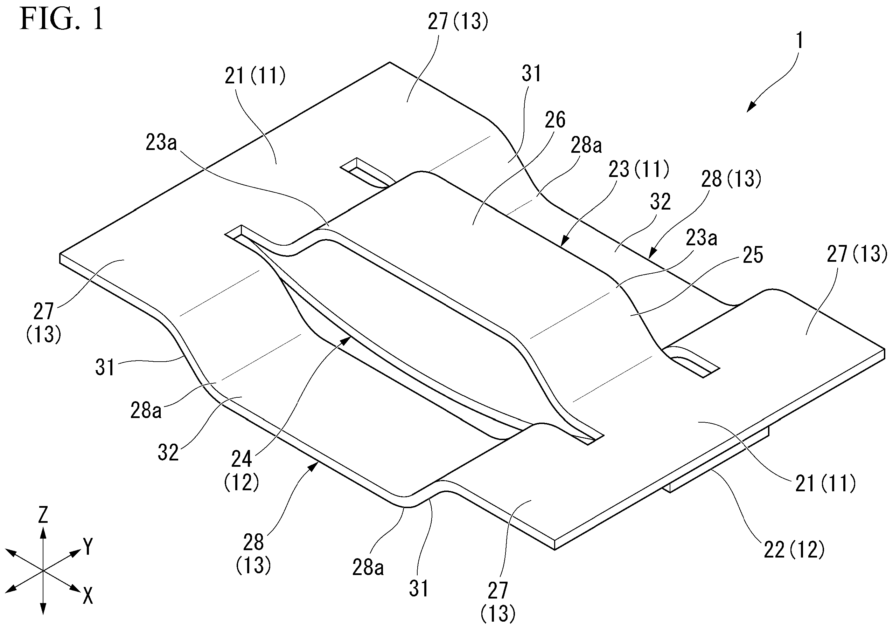

An embodiment of a pressing spring device will be described below with reference to FIGS. 1 to 3.

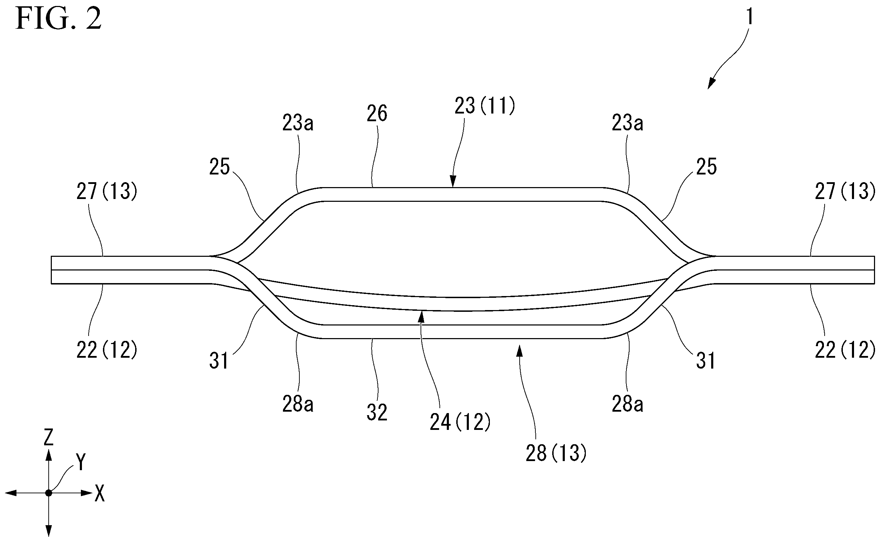

As shown in FIG. 1 and FIG. 2, a pressing spring device 1 of the present embodiment includes a first leaf spring 11 and a second leaf spring 12 that extend in a length direction X and is used while located between a pair of pressed objects in a plate-thickness direction Z.

Both end portions of the first leaf spring 11 in the length direction X and both end portions of the second leaf spring 12 in the length direction X are laminated and connected together in the plate-thickness direction Z.

Hereinafter, both end portions of the first leaf spring 11 in the length direction X are referred to as first fixation portions (fixation portions) 21, and both end portions of the second leaf spring 12 in the length direction X are referred to as second fixation portions (fixation portions) 22.

Intermediate portions 23 and 24 of the first leaf spring 11 and the second leaf spring 12 in the length direction X face each other while spaced apart in the plate-thickness direction Z.

When viewed in a plate-width direction Y, the intermediate portion 24 of the second leaf spring 12 is curved to have a curved shape convexing in a direction of being away from the intermediate portion 23 of the first leaf spring 11 in the plate-thickness direction Z.

The intermediate portion 23 of the first leaf spring 11 includes a pair of first vertical wall portions 25 and a first flat portion 26 and has a trapezoid shape when viewed in the plate-width direction Y.

The first vertical wall portion 25 extends from the first fixation portion 21 in a direction of being away from the second fixation portion 22 (that is, the second leaf spring 12) in the plate-thickness direction Z. The pair of first vertical wall portions 25 face each other in the length direction X. The pair of first vertical wall portions 25 extend in a direction in which they approach each other in the length direction X as they go away from the first fixation portions 21 in the plate-thickness direction Z. In other words, the first vertical wall portions 25 extend from the first fixation portions 21 toward the central position of the intermediate portion 23 in the length direction X as they go away from the second leaf spring 12.

The first flat portion 26 joins the pair of first vertical wall portions 25 in the length direction X. The first flat portion 26 is formed into a flat plate shape in which front and back surfaces thereof are directed in the plate-thickness direction Z. When viewed in the plate-width direction Y, a connection portion 23a between the first flat portion 26 and the first vertical wall portion 25 is curved to have a curved shape convexing toward the outside in the length direction X.

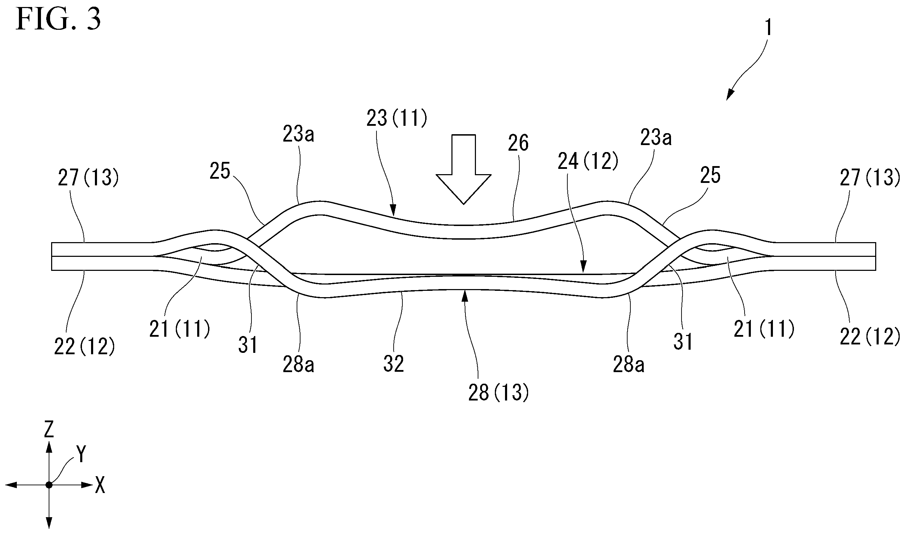

When a pushing load that is directed toward the second leaf spring 12 in the plate-thickness direction Z is applied to the first flat portion 26, as shown in FIG. 3, the first flat portion 26 is formed so as to be elastically deformable to bulge toward the second leaf spring 12 in the plate-thickness direction Z.

In the example shown in the drawings, the length of the first flat portion 26 along the surface of the first flat portion 26 when viewed in the plate-width direction Y is greater than the length of the first vertical wall portion 25 along the surface of the first vertical wall portion 25 when viewed in the plate-width direction Y. When the above-described pushing load is added to the first flat portion 26, the first flat portion 26 is formed so as to be elastically deformable such that the first flat portion 26 and the pair of first vertical wall portions 25 have an M shape when viewed in the plate-width direction Y and such that a central portion of the first flat portion 26 in the length direction X bulges toward the second leaf spring 12 in the plate-thickness direction Z.

The amount of protrusion in the plate-thickness direction Z of the intermediate portion 23 of the first leaf spring 11 with respect to the first fixation portions 21 is greater than the amount of protrusion in the plate-thickness direction Z of the intermediate portion 24 of the second leaf spring 12 with respect to the second fixation portions 22.

The length of the intermediate portion 24 of the second leaf spring 12 along the surface of the second leaf spring 12 when viewed in the plate-width direction Y is less than the length of the intermediate portion 23 of the first leaf spring 11 along the surface of the first leaf spring 11 when viewed in the plate-width direction Y.

When viewed in the plate-width direction Y, the pressing spring device 1 of the present embodiment includes a third leaf spring 13 having an intermediate portion 28, and the intermediate portion 28 is provided on an opposite side of the intermediate portion 24 of the second leaf spring 12 to the intermediate portion 23 of the first leaf spring 11 such that the intermediate portion 24 of the second leaf spring 12 is located between the intermediate portion 23 and the intermediate portion 28 in the plate-thickness direction Z. When viewed in the plate-width direction Y, the intermediate portions 24 and 28 of the second leaf spring 12 and the third leaf spring 13 are spaced apart in the plate-thickness direction Z.

In the example shown in the drawings, the third leaf spring 13 is provided on each of both sides of the first leaf spring 11 in the plate-width direction Y, so that the first leaf spring 11 is located between the third leaf springs 13 in the plate-width direction Y. Both end portions of the third leaf spring 13 in the length direction X are integrated with the first fixation portions 21 of the first leaf spring 11 and protrude in the plate-width direction Y from the first fixation portions 21. The first leaf spring 11 and the third leaf spring 13 are formed of a single plate body having an equal plate thickness on the entire region thereof.

Hereinafter, both end portions of the third leaf spring 13 in the length direction X will be referred to as protruding portions 27.

The intermediate portion 28 of the third leaf spring 13 in the length direction X include a pair of third vertical wall portions 31 and a third flat portion 32.

When viewed in the plate-width direction Y, the pair of third vertical wall portions 31 extend from the protruding portions 27 of the third leaf spring 13 in a direction of being away from the intermediate portion 23 of the first leaf spring 11 in the plate-thickness direction Z. The pair of third vertical wall portions 31 extend in a direction in which they approach each other in the length direction X as they go away from the protruding portions 27 in the plate-thickness direction Z. In other words, the third vertical wall portions 31 extend toward the central position of the intermediate portion 28 in the length direction X as they go away from the protruding portions 27 in the plate-thickness direction Z.

The third flat portion 32 joins the pair of third vertical wall portions 31 in the length direction X. When viewed in the plate-width direction Y, a connection portion 28a between the third flat portion 32 and the third vertical wall portion 31 is curved to have a curved shape convexing toward the outside in the length direction X. When viewed in the plate-width direction Y, the third flat portion 32 is located on an opposite side of the intermediate portion 24 of the second leaf spring 12 to the first flat portion 26 such that the intermediate portion 24 of the second leaf spring 12 is located between the first flat portion 26 and the third flat portion 32 in the plate-thickness direction Z.

When viewed in the plate-width direction Y, the intermediate portion 28 of the third leaf spring 13 has an opposite trapezoid shape to the intermediate portion 23 of the first leaf spring 11. When viewed in the plate-width direction Y, the intermediate portions 28 and 23 of the third leaf spring 13 and the first leaf spring 11 have symmetrical shapes with respect to a straight line that passes through the central portion between the first fixation portion 21 and the protruding portion 27 in the plate-thickness direction Z and extends in the length direction X. The dimensions, including the plate width, of the third vertical wall portions 31 and the third flat portion 32 of the third leaf spring 13 are all the same as the dimensions of the first vertical wall portions 25 and the first flat portion 26 of the first leaf spring 11, respectively.

As described above, according to the pressing spring device 1 of the present embodiment, since the first leaf spring 11 and the second leaf spring 12 are included therein, when the pressing spring device 1 is located between the pair of pressed objects in the plate-thickness direction Z and a pushing load that is directed toward the second leaf spring 12 in the plate-thickness direction Z is applied to the first flat portion 26 of the first leaf spring 11, a tensile force in the length direction X is applied to the second leaf spring 12 through the first vertical wall portions 25 and the first fixation portions 21 of the first leaf spring 11.

At this time, since the length of the intermediate portion 24 of the second leaf spring 12 along the surface of the second leaf spring 12 when viewed in the plate-width direction Y is less than the length of the intermediate portion 23 of the first leaf spring 11 along the surface of the first leaf spring 11 when viewed in the plate-width direction Y, regardless of a material or the like of the second leaf spring 12, the second leaf spring 12 limits deformation of the first leaf spring 11, making it possible to increase the spring constant of the pressing spring device 1 that appears, and it is possible to output a high pressing force with a short stroke.

When the pushing load applied to the first flat portion 26 of the first leaf spring 11 increases and the deformation of the second leaf spring 12 in the length direction X is restricted, as shown in FIG. 3, the first flat portion 26 is elastically deformed to bulge toward the second leaf spring 12 in the plate-thickness direction Z, and it is possible to reduce the spring constant of the pressing spring device 1 that appears. Therefore, in the process in which the applied pushing load in the plate-thickness direction X increases, the spring constant that appears can be made high during small displacements and low during large displacements.

Since the length of the first flat portion 26 along the surface of the first flat portion 26 when viewed in the plate-width direction Y is greater than the length of the first vertical wall portion 25 along the surface of the first vertical wall portion 25 when viewed in the plate-width direction Y, in the process in which the pushing load applied to the first flat portion 26 increases, when the deformation of the second leaf spring 12 in the length direction X is restricted, the first flat portion 26 can be easily deformed to bulge toward the second leaf spring 12 in the plate-thickness direction Z.

When viewed in the plate-width direction Y, the intermediate portion 28 of the third leaf spring 13 is provided on an opposite side of the intermediate portion 24 of the second leaf spring 12 to the intermediate portion 23 of the first leaf spring 11 such that the intermediate portion 24 of the second leaf spring 12 is locate between the intermediate portion 23 and the intermediate portion 28 in the plate-thickness direction Z, and when viewed in the plate-width direction Y, the intermediate portions 24 and 28 of the second leaf spring 12 and the third leaf spring 13 are spaced apart in the plate-thickness direction Y. Therefore, the first flat portion 26 of the first leaf spring 11 and the intermediate portion 28 of the third leaf spring 13 are located between the pair of pressed objects in the plate-thickness direction Z, it is possible to apply a pushing load to the first leaf spring 11 and the third leaf spring 13 with a little variation in load from the pair of pressed objects, and stabilizing the posture of the pressing spring device 1 between the pair of pressed objects, or the like, can be obtained.

Since the third leaf spring 13 that includes the protruding portions 27, the pair of third vertical wall portions 31, and the third flat portion 32 is provided, the first flat portion 26 of the first leaf spring 11 and the third flat portion 32 of the third leaf spring 13 are located between the pair of pressed objects in the plate-thickness direction Z, it is possible to apply a pushing load to the first leaf spring 11 and the third leaf spring 13 with a little variation in load from the pair of pressed objects, and stabilizing the posture of the pressing spring device 1 between the pair of pressed objects, or the like, can be obtained.

In the present embodiment, when a pushing load that is directed toward the second leaf spring 12 in the plate-thickness direction Z is applied to the first flat portion 26, the first flat portion 26 may not bulge toward the second leaf spring 12 in the plate-thickness direction Z and may maintain the shape thereof before the pushing load is applied. The length of the first flat portion 26 along the surface of the first flat portion 26 when viewed in the plate-width direction Y may be less than the length of the first vertical wall portion 25 along the surface of the first vertical wall portion 25 when viewed in the plate-width direction Y.

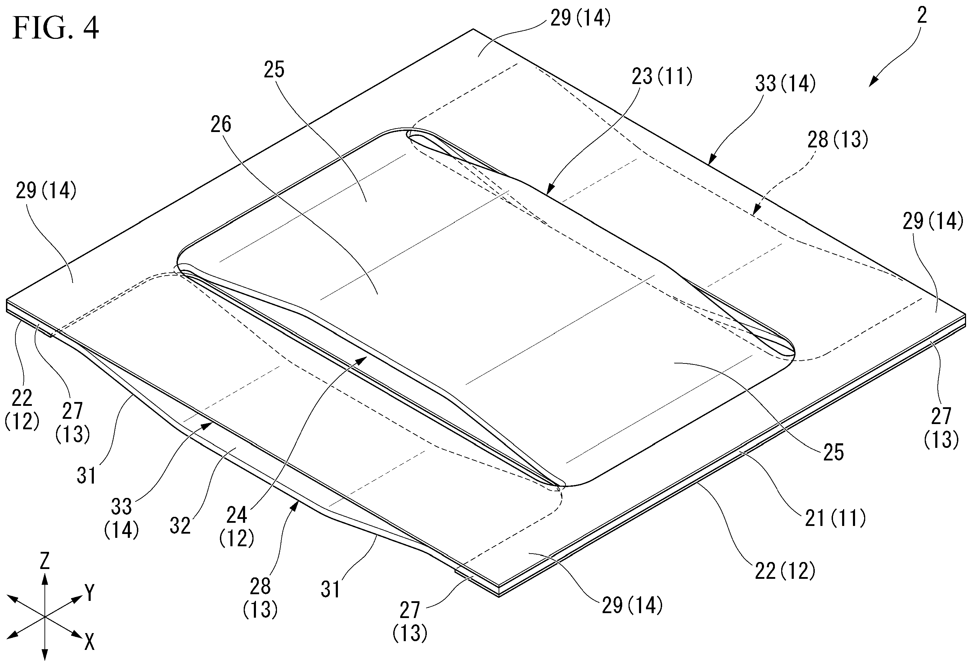

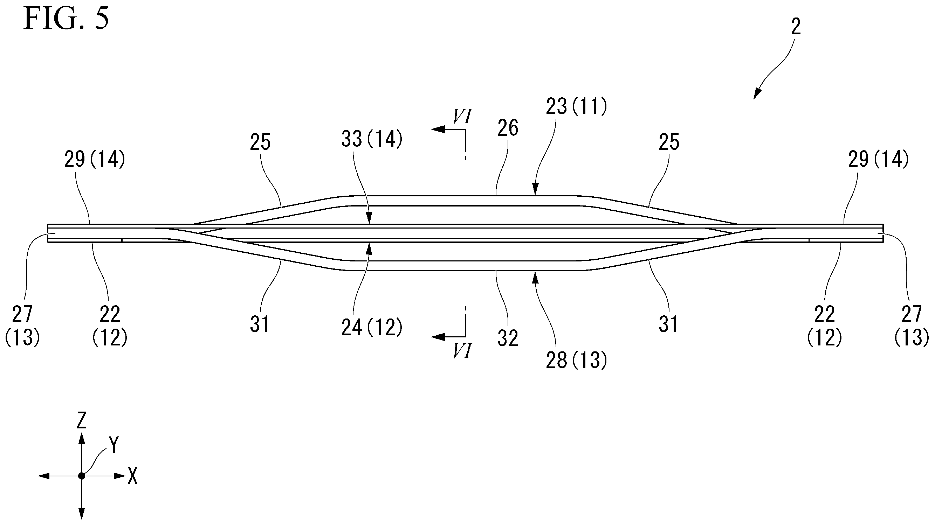

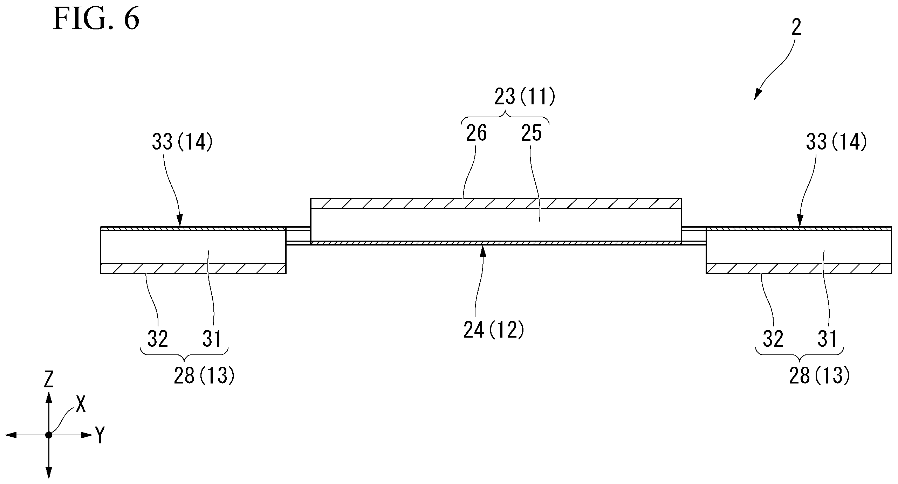

A pressing spring device 2 according to a second embodiment of the present invention will be described below with reference to FIGS. 4 to 6.

In the second embodiment, the same components as those in the first embodiment are denoted by the same reference numerals, the descriptions thereof are omitted, and only the differences therebetween will be described.

In the pressing spring device 2 of the present embodiment, an intermediate portion 24 of a second leaf spring 12 is formed into a flat plate shape in which front and rear surfaces thereof are directed in a plate-thickness direction Z. In the second leaf spring 12, second fixation portions 22 protrude further on both sides in a plate-width direction Y than the intermediate portion 24 and are laminated and connected to protruding portions 27 of a pair of third leaf springs 13. The plate width of a first leaf spring 11 is greater than the plate width of each third leaf spring 13. The plate width of the second leaf spring 12 is greater than the plate width of each of fourth leaf springs 14 that will be described later. The plate width of each of the second leaf spring 12 and the fourth leaf spring 14 has a size such that it does not hinder deformation of each of the third leaf spring 13 and the first leaf spring 11 in the plate-thickness direction Z.

In the present embodiment, the second fixation portion 22 may not protrude further on both sides in the plate-width direction Y than the intermediate portion 24.

The fourth leaf spring 14 whose both end portions in a length direction X are laminated and connected to the protruding portions 27 of the third leaf spring 13 is provided.

Hereinafter, both end portions of the fourth leaf spring 14 in the length direction X are referred to as fourth fixation portions 29.

Intermediate portions 33 and 28 of the fourth leaf spring 14 and the third leaf spring 13 in the length direction X face each other while spaced apart in the plate-thickness direction Z. The two fourth leaf springs 14 are provided at the pair of third leaf springs 13. The fourth leaf spring 14 is formed in a flat plate shape in which front and rear surfaces thereof are directed in the plate-thickness direction Z on the entire length thereof in the length direction X. When viewed in the plate-width direction Y, an intermediate portion 23 of the first leaf spring 11 and the intermediate portion 28 of the third leaf springs 13 are located on both sides of the fourth leaf spring 14 in the plate-thickness direction Z. The fourth fixation portions 29 of the two fourth leaf springs 14 are joined together in the plate-width direction Y, and this joint portion is laminated and connected to a first fixation portion 21 of the first leaf spring 11. The length of the intermediate portion 33 of the fourth leaf spring 14 along the surface of the fourth leaf spring 14 when viewed in the plate-width direction Y is less than the length of the intermediate portion 28 of the third leaf springs 13 along the surface of the third leaf spring 13 when viewed in the plate-width direction Y.

In the present embodiment, the fourth fixation portions 29 of the two fourth leaf springs 14 may not be joined in the plate-width direction Y.

As described above, according to the pressing spring device 2 of the present embodiment, in addition to the above-described effects obtained by the pressing spring device 1 of the first embodiment, since the fourth leaf spring 14 is provided, when a pushing load that is directed toward the first leaf spring 11 in the plate-thickness direction Z is applied to the third flat portion 32 of the third leaf spring 13, a tensile force in the length direction X is applied to the fourth leaf spring 14, the fourth leaf spring 14 limits deformation of the third leaf spring 13, and thus it is possible to reliably increase the spring constant of the pressing spring device 2 that appears.

The technical scope of the present invention is not limited to the above-described embodiments, and various modifications can be made within the scope of the present invention.

For example, the intermediate portions 24 and 33 of the second leaf spring 12 and the fourth leaf spring 14 may be curved to have curved shapes convexing toward the intermediate portion 23 of the first leaf spring 11 in the plate-thickness direction Z when viewed in the plate-width direction Y or may extend in the length direction X so as to have wave shapes when viewed in the plate-width direction Y.

The intermediate portion 33 of the fourth leaf spring 14 may be curved to have a curved shape convexing in a direction of being away from the intermediate portion 23 of the first leaf spring 11 in the plate-thickness direction Z when viewed in the plate-width direction Y.

The pressing spring devices of the above-described embodiments may not be provided with the third leaf spring 13 and the fourth leaf spring 14.

The second fixation portion (fixation portion) 22 may be provided in a portion of the second leaf spring 12 other than both end portions thereof in the length direction X.

The second leaf spring 12 and the third leaf spring 13 may be located at an equal position in the plate-width direction Y, and the intermediate portions 24 and 28 of the second leaf spring 12 and the third leaf spring 13 may face each other in the plate-thickness direction Z.

In addition, the constituent elements in the above embodiments can be replaced with known constituent elements within the scope of the present invention, and the above-described embodiments and modifications may be combined together as appropriate.

### REFERENCE SIGNS LIST

1, 2 Pressing spring device
11 First leaf spring
12 Second leaf spring
13 Third leaf spring
21 First fixation portion (fixation portion)
22 Second fixation portion (fixation portion)
23 Intermediate portion of first leaf spring
24 Intermediate portion of second leaf spring
25 First vertical wall portion
26 First flat portion
27 Protruding portion
28 Intermediate portion of third leaf spring
31 Third vertical wall portion
32 Third flat portion
X length direction
Y Plate-width direction
Z Plate-thickness direction

## Claims

1. A pressing spring device comprising:
a first leaf spring and a second leaf spring extending in a length direction,
wherein both end portions of the first leaf spring in the length direction are fixation portions laminated and connected to the second leaf spring in a plate-thickness direction,
intermediate portions of the first leaf spring and the second leaf spring in the length direction face each other while spaced apart in the plate-thickness direction,
the intermediate portion of the first leaf spring includes
a pair of first vertical wall portions extending from the fixation portions of the first leaf spring in a direction of being away from the second leaf spring in the plate-thickness direction, and
a first flat portion joining the pair of first vertical wall portions in the length direction, and
a length of the intermediate portion of the second leaf spring along a surface of the second leaf spring when viewed in a plate-width direction is less than a length of the intermediate portion of the first leaf spring along a surface of the first leaf spring when viewed in the plate-width direction.

2. The pressing spring device according to claim 1, wherein, when a pushing load that is directed toward the second leaf spring in the plate-thickness direction is applied to the first flat portion, the first flat portion is formed so as to be elastically deformable to bulge toward the second leaf spring in the plate-thickness direction.

3. The pressing spring device according to claim 2, wherein a length of the first flat portion along a surface of the first flat portion when viewed in the plate-width direction is greater than lengths of the first vertical wall portions along surfaces of the first vertical wall portions when viewed in the plate-width direction.

4. The pressing spring device according to any one of claims 1 to 3, comprising:
a third leaf spring having an intermediate portion, the intermediate portion being, when viewed in the plate-width direction, provided on an opposite side of the intermediate portion of the second leaf spring to the first leaf spring such that the intermediate portion of the second leaf spring is located between the first leaf spring and the intermediate portion of the third leaf spring in the plate-thickness direction,
wherein, when viewed in the plate-width direction, the intermediate portions of the second leaf spring and the third leaf spring are spaced apart in the plate-thickness direction.

5. The pressing spring device according to any one of claims 1 to 3, comprising:
a pair of third leaf springs provided on both sides of the first leaf spring in the plate-width direction,
wherein both end portions of each third leaf spring in the length direction are protruding portions protruding from the fixation portions of the first leaf spring in the plate-width direction,
an intermediate portion of each third leaf spring in the length direction includes
a pair of third vertical wall portions, when viewed in the plate-width direction, extending from the protruding portions of each third leaf spring in a direction of being away from the intermediate portion of the first leaf spring in the plate-thickness direction, and
a third flat portion joining the pair of third vertical wall portions in the length direction, and
the third flat portion is, when viewed in the plate-width direction, located on an opposite side of the intermediate portion of the second leaf spring to the first flat portion such that the intermediate portion of the second leaf spring is located between the first flat portion and the third flat portion in the plate-thickness direction.
